Europäisches Patentamt

(19) European Patent Office

Office européen des brevets

(11) EP 0 721 959 A2

(12) **EUROPEAN PATENT APPLICATION**

(43) Date of publication:
17.07.1996 Bulletin 1996/29

(51) Int. Cl.$^6$: **C08F 2/32**

(21) Application number: 96300171.4

(22) Date of filing: 10.01.1996

(84) Designated Contracting States:
ES FR GB IT PT

(30) Priority: 10.01.1995 GB 9500384

(71) Applicant: **Synthite Limited**
Mold, Clwyd CH7 1BT (GB)

(72) Inventors:
• **Watt, Peter**
Belfast, BT6 8PG, Northern Ireland (GB)

• **Loughran, Gerald**
Antrim BT41 1DD, Northern Ireland (GB)
• **Mikolajewicz, Roman**
Clwyd CH7 6XZ, Wales (GB)

(74) Representative: **Pennant, Pyers**
Stevens, Hewlett & Perkins
1 Serjeants' Inn
Fleet Street
London EC4Y 1LL (GB)

(54) **Method of making inverse emulsion thickeners**

(57) A method of making a water-in-oil polymer emulsion having improved bleed/flush properties when used as an inverse emulsion thickener in pigment print-paste applications, comprises combining an aqueous solution of at least one polymerisable monomer with an inert hydrophobic liquid to form a water-in-oil monomer emulsion, wherein this step is performed by homogenisation which is continued until the water-in-oil monomer emulsion has a desired elevated viscosity.

EP 0 721 959 A2

**Description**

## INTRODUCTION

US Patent 3,284,393 discloses a process for the preparation of water-in-oil emulsion polymers in which the water-soluble monomers are emulsified in the presence of water-in-oil emulsifiers under the action of high shear forces in an inert hydrophobic liquid and are then polymerised in the presence of free-radical polymerisation initiators.

US Patent 3,826,441 discloses a process for the preparation of stable water in oil emulsion polymers wherein a fundamental change was made to the water-to-oil ratio.

The water-in-oil emulsions of water-soluble polymers can be used directly, in accordance with the teaching of U.S. Patent 3,642,019, by inverting the water-in-oil emulsion in an aqueous medium in the presence of a water soluble surfactant, the polymer rapidly dissolving.

US Patent 4,059,552 discloses cross-linked, finely divided polymers which are used as thickening agents for aqueous solutions particularly useful where high shear conditions are encountered in the application. The main benefit of cross-linked polymers over linear polymers is that solutions of these polymers exhibit pseudoplastic rheology and "short" solution characteristics which are ideal for application as thickeners for pigment printing pastes.

One of the most important aspects of inverse emulsion polymerisation is choice of water-in-oil emulsifier. There are many to choose from and these include, "Span 80" available from I.C.I. Speciality Chemicals which is a commercially available form of Sorbitan Mono-oleate,

U.S. Patent 4,022,736 describes a process for producing freeze-thaw stable, self-inverting, water-in-oil emulsions.

## BACKGROUND

A pigment printing paste spreads rapidly on a fabric, forming a stain with blurred edges. The spreading can be explained by the capillary action of the fabric. Sharp outlines and thus clearly defined designs can be obtained only by using thickeners whose capillary forces are stronger than those of the fabric. Besides this, the thickeners must exert a protective colloidal action on the colour-forming substances and/or the other chemicals utilised within the print paste.

The problem of providing thickener compositions having good bleed/flush properties has faced the industry for several decades. Formulation changes designed to improve thickening properties tend to spoil bleed/flush properties and vice versa. It is an object of the present invention to provide a method of improving the bleed/flush properties of water-in-oil polymer emulsions intended for use as inverse emulsion thickeners in pigment print-paste applications.

## THE INVENTION

The invention provides a method of making a water-in-oil polymer emulsion having improved bleed/flush properties when used as an inverse emulsion thickener in pigment print-paste applications, by combining an aqueous solution of at least one polymerisable monomer with an inert hydrophobic liquid to form a water-in-oil monomer emulsion and effecting polymerisation of the at least one polymerisable monomer to form the desired water-in-oil polymer emulsion, characterised in that the step of combining the aqueous monomer solution with the inert hydrophobic liquid is performed by homogenisation which is continued until the water-in-oil monomer emulsion has a desired elevated viscosity.

Preferred water-soluble polymerisable monomers are, for example, ethylenically unsaturated monomers such as acrylic acid, methacrylic acid, vinyl sulphonic acid, acrylamidomethylpropane sulphonic acid, acrylamide and methacrylamide. The carboxylic acids and other ethylenically unsaturated acids can be utilised in the form of the free acid, in partially neutralised form or in fully neutralised form.

Examples of bases suitable for neutralisation are ammonia, sodium hydroxide and amines such as triethylamine, butylamine, morpholine, ethanolamine, diethanolamine and triethanolamine. Incorporation of a less volatile base such as ethanolamine results in thickeners which give rise to pigment printing pastes of greater stability when textile printing mill temperatures become excessive. Reference is directed to the aforesaid U.S. Patent 4,022,736 for a discussion of many conventional features of the method of this invention.

The monomer mixture preferably includes a cross-linking agent which contains at least two non-conjugated ethylenically unsaturated bonds. The nature of the cross-linking agent is not material to the invention, but pentaerythritol diallyl ether, divinyl urea, ally methacrylate, 2,2-bis(acrylamido) acetic acid and N,N-methylene-bis-acrylamide are suitable. The proportion of cross-linking agent is preferably from 10 to 5,000 parts by weight per million parts by weight of polymerisable monomers.

Reference is directed to the aforesaid U.S. Patent 4,059,552 for a fuller discussion of this aspect.

Chain transfer agent(s) may also be included which has the effect of regulating the molecular weight of the formed polymer. Known chain transfer agents may be used for this purpose.

An aqueous solution of the aforesaid monomers is combined with an inert hydrophobic liquid. Preferred hydrophobic liquids are aliphatic hydrocarbons, and materials described in the prior literature are suitable for use in the present invention.

A water-in-oil surfactant is also included, the nature of which is not material to this invention. Preferably this water-in-oil surfactant is present in the water-in-oil monomer emulsion in an amount of 0.5 to 10%.

The aqueous monomer solution is combined with the inert hydrophobic liquid. Preferably the proportion of inert hydrophobic liquid is in the range 12 to 30% by weight.

A key feature of the invention is that this step of combining these two components is performed by homogenisation which is continued until the water-in-oil monomer emulsion has a desired elevated viscosity. Homogenisation is preferably effected by means of a high shear mixer, a turbine or paddle blade mixer is unlikely to exert the powerful shearing action required. Continued homogenisation has the effect of progressively increasing the viscosity of the formed emulsion, as a result of a progressive decrease in the dispersed aqueous droplet size. This invention is based on the surprising discovery that, water-in-oil monomer emulsion viscosity does correlate with bleed/flush properties of the inverse polymer emulsion thickener, in the sense that high monomer emulsion viscosity leads to good bleed/flush properties in the thickener. Homogenisation is preferably continued until the monomer emulsion viscosity has reached a level of at least 2000, particularly at least 3000 cPs when measured using a UK RV8 Viscometer or a Brookfield RVT, spindle 3 speed 20 at 25°C. A particularly preferred final monomer emulsion viscosity is in the range 3400 to 3800 cPs. While there is no theoretical upper limit on the monomer emulsion viscosity, in practice it becomes increasingly difficult to carry out the required homogenisation and to nitrogen purge the resulting monomer emulsion.

The minimum usable monomer emulsion viscosity depends on what other steps are being taken to control the bleed/flush properties of the thickener.

Bleed/flush properties may, to some extent be controlled by altering the polymer composition or by other modifications of the aqueous or oil phase formulations. If all these steps are being taken, then a monomer emulsion having a viscosity as low as 1000 cPs may be satisfactory. If none of these steps are being taken, then the monomer emulsion may need to have a viscosity of at least 2000 cPs.

For polymerisation of the monomers in the monomer emulsion, free-radical polymerisation initiators can be used which are all polymerisation initiators conventionally employed. These include water-soluble initiator systems, such as the chlorate-sulphite, sodium peroxydisulphate and potassium peroxidisulphate systems. When utilising redox initiator systems, the oxidant part of the initiator system is added to the aqueous solution of polymerisable monomers prior to emulsification.

The reducing portion of the redox initiator system is then added into the monomer emulsion thus initiating polymerisation.

If required, the viscosity of the polymer emulsion can be reduced to a convenient level by adding more of the oil phase. To assist self-inversion of the finished product, a water-soluble surfactant may be added to the water-in-oil polymer emulsion. Commonly used inverting surfactants are non- ionic surfactants with an HLB greater than 8.

The following examples illustrate the invention.

## EXAMPLE 1

To a suitable reaction vessel are added 60.0 parts of acrylamide, 200.0 parts of acrylic acid and 365.0 parts of deionised water. The resultant solution is partially neutralised with aqueous ammonia solution.

To this solution is added 1925 parts per million by weight based on monomer of tetrasodium ethylenediamine tetraacetate, 539 parts per million by weight based on monomer of 2,2 bis acrylamide acetic acid and 3846 parts per million by weight based on monomer of sodium chlorate. The resultant solution constitutes the aqueous monomer phase.

The oil phase is prepared by dissolving 25.0 parts of Span 80 (sorbitan Mono-oleate available from I.C.I. Specialty Chemicals) in 200.0 parts of a commercially available aliphatic hydrocarbon (distillation range 285-323°C).

The complete oil phase system is added to an emulsification vessel equipped with a suitable high shear emulsifier. The monomer aqueous phase is slowly added thereto to form an emulsion having a viscosity of 3500 cPs (UK RV8 Viscometer Spindle 3/20 rpm 25°C).

The monomer emulsion is added to a suitable reaction vessel equipped with a stirrer, sparge tube thermometer and condenser. The monomer emulsion is purged with nitrogen gas.

Stirring continues and sodium metabisulphite solution is added into the vessel over a period of 2-3 hours. Adiabatic polymerisation occurs with the vessel contents rising in temperature. Cooling water is utilised as necessary during polymerisation. The resultant water-in-oil polymer emulsion is cooled down and is adjusted with 10.0 parts of a suitable inverting surfactant.

## EXAMPLE 2

As example 1 but the monomer emulsion viscosity is 1000 cPs. This is obtained by simple mixing of the aqueous and oil phases.

## EXAMPLE 3

The polymer emulsions from Examples 1 and 2 were used to thicken a pigment printing paste system and the resultant pastes were printed onto 65/35 polyester cotton fabric in a diagonal line design.

| | |
|---|---|
| WATER | 83.70 |
| BINDER 733EG (45% ACRYLIC BINDER) | 10.00 |
| POLYMER EMULSION (FROM EXAMPLE 1 OR 2) | 3.30 |
| AQUARINE BLUE 3GW | 3.00 |
| | 100.00 |

The print-paste ingredients were mixed thoroughly to yield a homogeneous print-paste.

The print-paste viscosity was measured in each case using a Brookfield RVT viscometer spindle 6 speed 20 at 20-25°C.

When using the polymer emulsion from either Example 1 or 2 the print-paste viscosity obtained is 17,500 cPs. However, the bleed/flush of the polymer emulsion from Example 1 is zero, whereas the bleed/flush of the polymer emulsion from Example 2 is commercially unacceptable.

The procedure of Examples 1 and 2 was repeated but using different homogenisation times in order to obtain monomer emulsions having different viscosities. The following table records the bleed/flush properties obtained.

| Monomer Emulsion Viscosity (cPs) | Bleed Flush Properties |
|---|---|
| 1000 | Unacceptable |
| 1500 | Unacceptable |
| 1600 | Unacceptable |
| 2000 | Unacceptable |
| 2600 | Slight Improvement |
| 3500 | Zero Bleed |

## Claims

1. A method of making a water-in-oil polymer emulsion having improved bleed/flush properties when used as an inverse emulsion thickener in pigment print-paste applications, by combining an aqueous solution of at least one polymerisable monomer with an inert hydrophobic liquid to form a water-in-oil monomer emulsion and effecting polymerisation of the at least one polymerisable monomer to form the desired water-in-oil polymer emulsion, characterised in that the step of combining the aqueous monomer solution with the inert hydrophobic liquid is performed by homogenisation which is continued until the water-in-oil monomer emulsion has a desired elevated viscosity.

2. A method as claimed in claim 1, wherein the at least one polymerisable monomer consists of ethylenically unsaturated monomer(s) with a cross-linking agent.

3. A method as claimed in claim 2, wherein the carboxylic acid, if one is used, is neutralised by a base or mixture of bases.

4. A method as claimed in any one of claims 1 to 3, wherein 10 to 5000 parts by weight of a cross-linking agent are used per million parts by weight of the at least one polymerisable monomer.

5. A method as claimed in claim 5, wherein the cross-linking agent is a compound which contains at least two non-conjugated ethylenically unsaturated double bonds.

6. A method as claimed in any one of claims 1 to 5 wherein the desired elevated viscosity is at least 2000 cPs Brookfield RVT spindle 3 speed 20 at 25°C.

7. A method as claimed in claim 6 wherein the desired elevated viscosity is 3400-3800 cPs.

8. A method as claimed in any one of claims 1 to 7, wherein the oil phase of the water-in-oil monomer emulsion is 18 - 24% by weight.

9. A method as claimed in any one of claims 1 to 8, wherein a water-in-oil surfactant is present in the water-in-oil monomer emulsion in an amount of 0.5 - 10.0% by weight.